# EUROPÄISCHE PATENTSCHRIFT

(11) **EP 3 278 644 B1**
(45) Veröffentlichungstag und Bekanntmachung des Hinweises auf die Patenterteilung: **01.04.2020**
(21) Anmeldenummer: 17001283.5
(22) Anmeldetag: 26.07.2017
(51) Int. Cl.: A01B 59/00, A01B 59/041

(54) **STABILISATOR FÜR EINEN UNTERLENKER**
STABILISER FOR A LOWER LINK
STABILISATEUR DES BRAS INFÉRIEURS D'ATTELAGE

(30) Priorität: 02.08.2016 DE 202016004702 U
(43) Veröffentlichungstag der Anmeldung: 07.02.2018
(73) Patentinhaber: JRS GmbH & Co. KG, 85119 Ernsgaden (DE)
(72) Erfinder: Sauermann, Johann, 85119 Ernsgaden (DE)
(74) Vertreter: Witzany, Manfred

(56) Entgegenhaltungen:
- EP-A1- 0 789 986
- EP-A1- 1 342 399
- EP-A1- 2 769 607
- DE-U1-202012 000 868

## Beschreibung

Die Erfindung betrifft einen Stabilisator für einen Unterlenker einer Drei-Punkt-Aufhängung eines Ackerschleppers.

Aus der DE 20 2012 000 868 U1 ist ein gattungsgemäßer Stabilisator für einen Unterlenker einer Drei-Punkt-Aufhängung eines Ackerschleppers bekannt. Dieser Stabilisator weist ein Rohr auf, in dem ein Kolben längsverschiebbar gehalten ist. Dabei ist der Kolben über eine Feder elastisch mit dem Rohr gekoppelt, um eine Verschiebbarkeit des Kolbens zu ermöglichen. Diese Verschiebbarkeit kann durch einen Arretierbügel aufgehoben werden, um die Verstellbarkeit des Unterlenkers zu unterbinden. Um den Kolben sicher im Rohr zu halten, ist am Ende des Rohres und am Ende des Kolbens jeweils ein Widerlager vorgesehen. Dieses Widerlager ist durch jeweils einen Draht gegenüber axialer Verschiebungen gestützt. Zu diesem Zweck ist im Rohr bzw. im Kolben jeweils ein Einstich von ca. 1 mm vorhanden, in den der Draht etwa zur Hälfte eindringt. Dieser Stabilisator hat sich in der Praxis bewährt und bildet den Ausgangspunkt der vorliegenden Erfindung.

Der Erfindung liegt die Aufgabe zugrunde, einen Stabilisator der eingangs genannten Art zu schaffen, der sich durch eine verbesserte Reproduzierbarkeit der sicherheitsrelevanten Befestigung auszeichnet.

Diese Aufgabe wird erfindungsgemäß mit den folgenden Merkmalen gelöst.

Der erfindungsgemäße Stabilisator dient zur Kontrolle der Seitwärtsbewegung von Unterlenkern in einer Drei-Punkt-Aufhängung eines Ackerschleppers. Dieser Stabilisator weist mindestens ein Rohr auf, in dem mindestens ein Kolben längsverschiebbar gehalten ist. Diese bilden zusammen ein Teleskop, welches die erforderliche seitliche Bewegungsfreiheit des Unterlenkers bewirkt. Diese ist insbesondere notwendig, wenn Arbeitsgeräte wie beispielsweise Pflüge im Feld arbeiten. In diesem Fall muss eine gewisse Seitenbeweglichkeit garantiert werden. Andererseits ist es aber wichtig, dass das Arbeitsgerät halbwegs in der Spur gehalten wird. Zu diesem Zweck sind der mindestens eine Kolben und das mindestens eine Rohr über mindestens eine Feder elastisch gekoppelt. Diese Feder sorgt für die notwendigen Rückstellkräfte, wenn das Arbeitsgerät zu weit aus der vorgesehenen Spur gerät. Während der Überlandfahrt, insbesondere im öffentlichen Straßennetz, ist es jedoch wichtig, dass das Arbeitsgerät keinerlei seitliche Schwenkbewegung ausführen kann, da dies den Straßenverkehr erheblich gefährden würde. Zu diesem Zweck weist der Stabilisator mindestens einen Arretierbügel auf, durch den die Verschiebbarkeit des mindestens einen Kolbens relativ zum mindestens einen Rohr aufhebbar ist. Damit kann je nach Anwendungszweck die seitliche Verschiebbarkeit der Unterlenker zugelassen oder verhindert werden. Um zu verhindern, dass der mindestens eine Kolben vollständig aus dem mindestens einen Rohr herausgerissen wird, ist im Bereich des Endes des mindestens einen Kolbens und/oder Rohres mindestens ein Einstich vorgesehen, der mindestens ein Widerlager axial stützt. Dieses mindestens eine Widerlager bildet einen Anschlag für die Bewegung des mindestens einen Kolbens relativ zum mindestens einen Rohr. Dabei ist es aber durchaus vorstellbar, dass die Wirkung als Anschlag nur mittelbar über die mindestens eine Feder erfolgt. Auf jeden Fall bestimmt das mindestens eine Widerlager die maximale Länge des Stabilisators. Es hat sich nun herausgestellt, dass im rauen landwirtschaftlichen Betrieb das mindestens eine Widerlager, welches als mindestens ein Drahtring ausgebildet ist während der Montage überdehnt werden kann. Dabei ist zu berücksichtigen, dass eine gewisse Deformation des mindestens einen Drahtrings erforderlich ist, um diesen im mindestens einen Einstieg montieren zu können. Wird er aber zu stark deformiert, was während des Einbaus passieren kann, so ergeben sich Ermüdungsbrüche im mindestens einen Drahtring, die dann später im Betrieb zu Brüchen führen können. Dies führt dann dazu, dass der mindestens eine Kolben vollständig aus dem mindestens einen Rohr herausgezogen wird, so dass der Stabilisator insgesamt wirkungslos wird. Um dies zu verhindern, ist vorgesehen, dass das Verhältnis zwischen dem Ringdurchmesser des mindestens einen Drahtrings und dessen Dicke - in Radialrichtung des Drahtringes betrachtet - höchstens 17 ist. Im Stand der Technik wird auf genormte Sprengringe zurückgegriffen, deren oben genanntes Verhältnis 20 beträgt. Durch das verringerte Verhältnis ergibt sich eine wesentlich steifere Ausbildung des mindestens einen Drahtringes, was ein Deformieren über die Bruchgrenze hinaus wesentlich erschwert. Dabei ist natürlich nachteilig, dass der mindestens eine Drahtring auf diese Weise eine recht hohe Deformationskraft benötigt, um montierbar zu sein. Dieser Nachteil wird jedoch dadurch ausgeglichen, dass der mindestens eine Drahtring in montierter Lage funktionstüchtig bleibt. Das große Problem an Ermüdungsbrüchen besteht insbesondere darin, dass sie erst während der Montage des mindestens einen Drahtrings entstehen, so dass eine nachträgliche Kontrolle nicht mehr möglich ist. Da andererseits der mindestens eine Drahtring ein wesentliches, sicherheitsrelevantes Bauelement ist, muss dieser hohen Qualitätsanforderungen genügen. Dies ist aber nur gewährleistet, wenn der mindestens eine Drahtring nur so weit deformiert wird, dass Ermüdungsbrüche zuverlässig ausgeschlossen werden können. Insbesondere beim Einsetzen von Hand zu Reparaturzwecken lässt sich dies mit der erfindungsgemäßen Ausgestaltung recht problemlos erreichen. Es ergibt sich auf diese Weise ein sehr robustes Widerlager, das auch hohen Stoßbelastungen standhält. Auf diese Weise stellt sich eine überraschend hohe Standzeit des Stabilisators auch im rauen landwirtschaftlichen Betrieb ein.

Zur weiteren Erhöhung der Steifigkeit des mindestens einen Drahtrings ist es vorteilhaft, wenn der Ringdurchmesser höchstens dem 15-fachen der Dicke in Radialrichtung beträgt. Auf diese Weise ergibt sich eine weitere Erhöhung der Steifigkeit und somit eine weiter verbesserte Sicherheit gegen Ermüdungsbrüche.

Zur weiteren Verbesserung ist es vorteilhaft, wenn der Durchmesser des mindestens einen Drahtrings höchstens dem 13-fachen der Dicke in Radialrichtung entspricht. Auf diese Weise ergibt sich ein optimaler Schutz gegenüber Ermüdungsbrüchen. Eine weitere Reduktion des Durchmesserzu-Dickenverhältnisses bringt kaum noch wesentliche Vorteile. Andererseits wird der mindestens eine Drahtring dann so steif, dass seine Montage schon recht schwierig wird. Insbesondere bei einem Verhältnis des Durchmessers zur Dicke in Radialrichtung kleiner als 10 wird die Montage des mindestens einen Drahtrings mit herkömmlichen Werkzeugen schon recht schwierig. Durch geeignete Zangen mit großem Hebelverhältnis lässt sich allerdings auch die Montage derart steifer Drahtringe bewerkstelligen. Aus diesem Grund ist das Verhältnis zwischen dem Durchmesser und der radialen Dicke des mindestens einen Drahtrings nach unten grundsätzlich offen.

Zur Erzielung einer möglichst hohen Stabilität des mindestens einen Drahtrings bei entsprechend hohen Schubkräften ist es günstig, wenn der mindestens eine Drahtring eine größere Dicke in Axialrichtung des Ringes als in Radialrichtung aufweist. Die zusätzliche Dicke in Axialrichtung geht dabei linear in die Steifigkeit des mindestens einen Drahtrings ein, so dass dieser Effekt relativ moderat bleibt. Andererseits ergibt sich im Drahtring auf diese Weise eine erhöhte Scherfestigkeit, so dass er Stoßkräften des mindestens einen Kolbens besser widerstehen kann. Dagegen geht die Dicke des mindestens einen Drahtrings quadratisch mit seiner Dicke in Radialrichtung, so dass jede Dickenerhöhung in Radialrichtung einen hohen Effekt auf die Steifigkeit hat.

Für den mindestens einen Drahtring hat sich neben einem üblichen, kreisförmigen Querschnitt insbesondere ein rechteckförmiger Querschnitt bewährt, da dieser Querschnitt ein recht hohes Verhältnis zwischen Scherfestigkeit und Steifigkeit aufweist.

Um Rissbildungen an scharfen Kanten des Stabilisators vorzubeugen, ist es schließlich vorteilhaft, wenn der Querschnitt abgerundete Ecken aufweist.

Der Erfindungsgegenstand wird beispielhaft anhand der Zeichnung erläutert, ohne den Schutzumfang zu beschränken.
- Figur 1: zeigt eine räumliche Darstellung eines Stabilisators für einen Ackerschlepper,
- Figur 2: eine zugeordnete Schnittdarstellung des Stabilisators gemäß Figur 1,
- Figur 3: eine räumliche Darstellung einer zweiten Ausführungsform eines Stabilisators,
- Figur 4: eine geschnittene Detaildarstellung einer ersten Ausführungsform des Widerlagers und
- Figur 5: eine geschnittene Detaildarstellung einer zweiten Ausführungsform des Widerlagers.

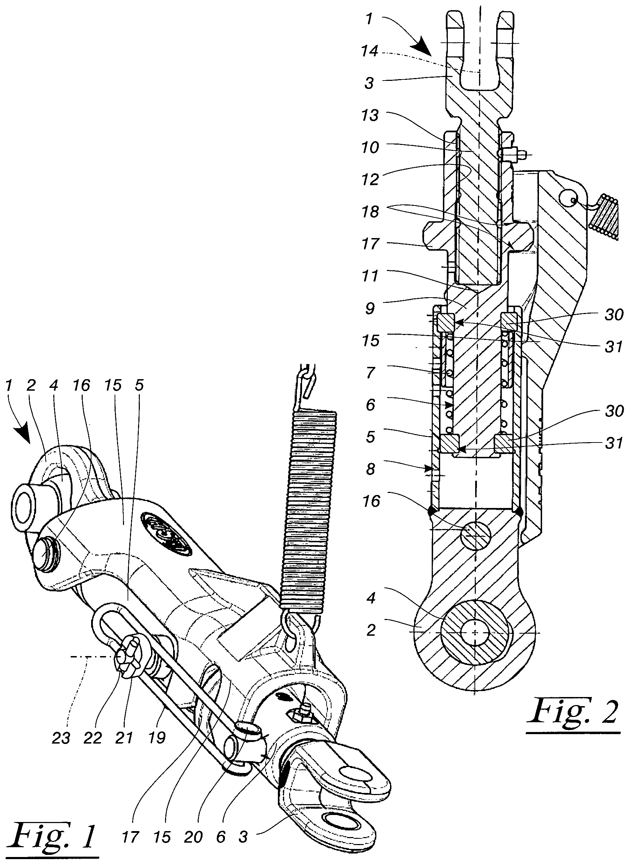

Ein Stabilisator 1 gemäß den Figuren 1 und 2 weist ein erstes Lager 2 und ein zweites Lager 3 auf. Üblicherweise wird das erste Lager 2 am Heck eines Ackerschleppers über eine Kugel 4 gehalten, während das zweite Lager 3 mit einem nicht dargestellten Unter- und/oder Oberlenker verbunden wird. Damit kann der Stabilisator 1 eine seitliche Bewegung des Unter- bzw. Oberlenkers beeinflussen.

Der Stabilisator 1 besteht aus einem Rohr 5, welches mit dem ersten Lager 2 verbunden ist. Im Rohr 5 ist ein Kolben 6 verschiebbar abgestützt. Zwischen dem Rohr 5 und dem Kolben 6 ist eine Feder 7 vorgesehen, die eine elastische Kopplung zwischen dem Rohr 5 und dem Kolben 6 erzeugt. Das Rohr 5 und der Kolben 6 bilden ein Teleskop 8, das eine gewisse Längenvariation des Stabilisators 1 erlaubt. Um einerseits der Feder 7 eine axiale Abstützung zu geben und andererseits ein unbeabsichtigtes Herausziehen des Kolbens 6 aus dem Rohr 5 zuverlässig zu verhindern, sind Widerlager 30 am Kolben 6 und innenseitig am Rohr 5 vorgesehen. Diese Widerlager 30 sind mittels eines Einstichs 31 im Rohr 5 bzw. Kolben 6 gehalten.

Der Kolben 6 ist zweistückig ausgebildet. Er besteht aus einem ersten Teil 9, an dem die Feder 7 angreift und einem zweiten Teil 10, das das zweite Lager 3 trägt. Im ersten Teil 9 des Kolbens 6 ist eine Sackbohrung 11 mit einem Innengewinde 12 vorgesehen, welches ein Außengewinde 13 des zweiten Teils 10 aufnimmt. Ist das zweite Lager 3 am Unter- bzw. Oberlenker festgelegt, so lässt es sich nicht um seine Längsachse 14 verdrehen. Durch Verdrehen des ersten Teils 9 des Kolbens 6 kann jedoch die Kolbenlänge entsprechend den jeweiligen Bedürfnissen eingestellt werden.

Um während der Fahrt im öffentlichen Straßenverkehr ein unerwünschtes Ausschwenken des Unter- bzw. Oberlenkers zuverlässig zu vermeiden, ist es notwendig, die Teleskopierbarkeit des Stabilisators 1 in diesem Anwendungsfall zu blockieren. Zu diesem Zweck ist am Rohr 5 ein Arretierbügel 15 um eine Achse 16 schwenkbar gehalten. Dieser Arretierbügel 15 übergreift eine Scheibe 17 des Kolbens 6 beidseitig. Zu diesem Zweck weist der Arretierbügel 15 zwei Anschlagflächen 18 auf, die flächig an der Scheibe 17 in der dargestellten Arretierstellung des Arretierbügels 15 anliegen. Der Arretierbügel 15 kann außerdem in eine nicht dargestellte Lösestellung verschwenkt werden, in der die Anschlagflächen 18 außer Eingriff mit der Scheibe 17 verbunden sind. In dieser Stellung ist das Teleskop 8 frei bewegbar.

Um ein Verdrehen des ersten Teiles 9 des Kolbens 6 um seine Längsachse 14 auch in der Arretierstellung des Arretierbügels 15 zu ermöglichen, ist die Scheibe 17 im Wesentlichen rotationssymmetrisch ausgebildet. Damit kann jederzeit geprüft werden, ob der Stabilisator 1 bereits korrekt in seiner Länge eingestellt ist.

Um zu verhindern, dass der Kolben 6 unbeabsichtigt in seiner Länge verstellt wird, ist am Kolben 6 ein Verriegelungsbügel 19 schwenkbar abgestützt. Dieser Verriegelungsbügel 19 ist um eine Achse 20 verschwenkbar und kann in eine in Figur 2 dargestellte Verriegelungsstellung gebracht werden. In dieser Verriegelungsstellung übergreift der Verriegelungsbügel 19 eine Arretierung 21. Hierdurch wird eine Verdrehung des Kolbens 6 unterbunden, wobei die Teleskopierbarkeit des Stabilisators 1 - je nach Stellung des Arretierbügels 15 - möglich oder unterbunden ist. Die Arretierung 21 besteht aus einem Druckknopf 22, der federnd vom Kolben 6 radial weggedrückt ist.

Durch Eindrücken des Druckknopfs 22 entgegen der Federkraft kann er um eine Achse 23 verdreht werden. Dabei kann er aus der dargestellten Verriegelungsstellung in eine um 90 Grad verdrehte Lösestellung überführt werden, in der der Verriegelungsbügel 19 in die nicht dargestellte Lösestellung bringbar ist. In dieser Lösestellung befindet sich der Verriegelungsbügel 19 außer Eingriff mit der Arretierung 21.

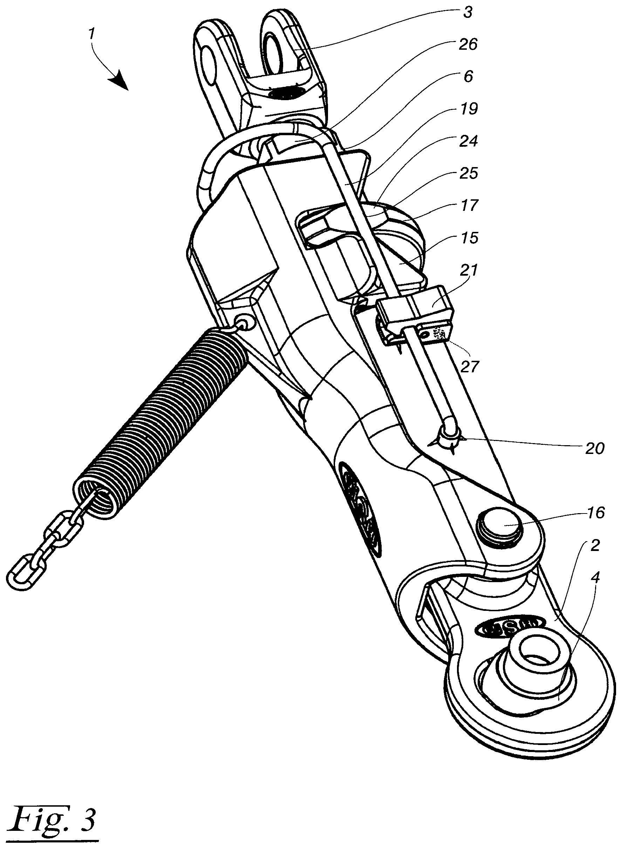

Die Figur 3 zeigt eine alternative Ausführungsform eines Stabilisators 1 gemäß Figur 1, wobei gleiche Bezugszeichen gleiche Teile benennen. Im Folgenden wird lediglich auf die Unterschiede zur Ausführungsform gemäß Figur 1 eingegangen.

Bei dieser Ausführungsform befindet sich die Achse 20 des Verriegelungsbügels 19 am Rohr 5 und kann nach oben verschwenkt werden. Der Verriegelungsbügel 19 umgreift die Scheibe 17 derart, dass die Scheibe 17 in der dargestellten Verriegelungsstellung nicht verdrehbar ist. Zu diesem Zweck besitzt die Scheibe 17 Abflachungen 24, in deren Mitte Einkerbungen 25 vorgesehen sind. In diese Einkerbungen 25 ist der Verriegelungsbügel 19 aufgenommen. Wirkt ein Drehmoment auf den Kolben 6, so wird dieser über die Scheibe 17 auf den Verriegelungsbügel 19 übertragen. Aufgrund der Abflachung 24 und der Einkerbung 25 müsste der Verriegelungsbügel 19 aufgespreizt werden, um diesem Drehmoment nachgeben zu können. Aufgrund seiner Stabilität und Bauart wird diese Aufspreizung jedoch verhindert, so dass eine Verdrehung des Kolbens 6 in dieser Verriegelungsstellung nicht möglich ist.

Der Verriegelungsbügel 19 ist durch die Arretierung 21 in der dargestellten Verriegelungsstellung arretiert. Durch Betätigen dieser Arretierung 21 kann der Verriegelungsbügel 19 frei um die Achse 20 verschwenkt werden. Dabei gerät er außer Eingriff mit der Scheibe 17. Damit können die Scheibe 17 und folglich auch der Kolben 6 bei geschlossenem Arretierbügel 15 verdreht werden.

Da mindestens vier Abflachungen 24 und Einkerbungen 25 in der Scheibe 17 vorgesehen sind, ist eine feinfühligere Längenverstellung des Stabilisators 1 möglich als der Gewindesteigung des Innengewindes 12 und Außengewindes 13 entspricht.

Der Kolben weist außerdem vier Schlüsselflächen 26 auf. Diese Schlüsselflächen 26 dienen zur Verbindung mit einem nicht dargestellten Gabelschlüssel, um ein einfaches Verdrehen der Scheibe 17 zu ermöglichen. Unter beengten Platzverhältnissen kann es vorkommen, dass eine volle Umdrehung des Gabelschlüssels nicht oder nur unter erschwerten Bedingungen möglich ist. Durch das Vorsehen von mindestens vier Schlüsselflächen kann der Schlüssel nach einer Drehung um 90° wieder neu an das nächste Paar Schlüsselflächen 26 angesetzt werden. Vorzugsweise wird der nicht dargestellte Gabelschlüssel über entsprechende Halter am Stabilisator 1 festgehalten, damit er zur Verstellung desselben sofort zur Hand ist. Als Halter ist insbesondere an einen Magnethalter gedacht.

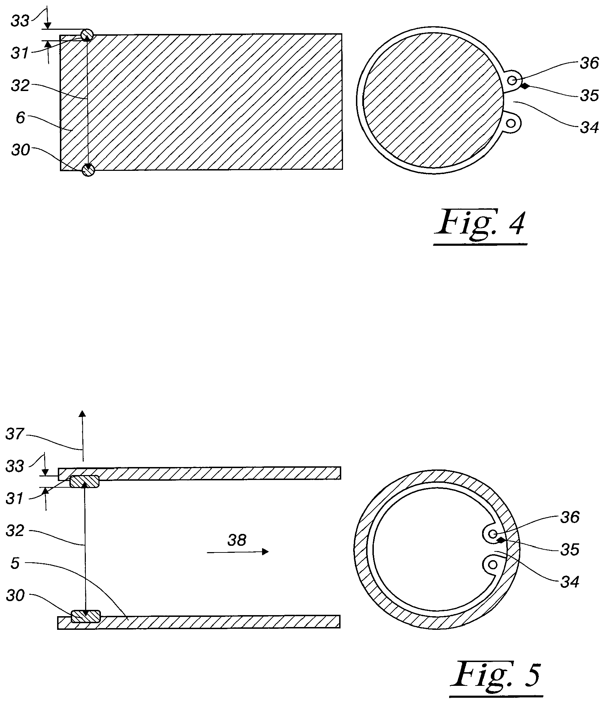

Die verschiedenen Ausführungsformen des Widerlagers 30 werden beispielhaft anhand der Figuren 4 und 5 erläutert, wobei gleiche Bezugszeichen jeweils gleiche Teile benennen.

Die Figur 4 zeigt eine erste Ausführungsform des Erfindungsgegenstandes. Dabei besitzt das als Drahtring ausgebildete Widerlager 30 einen kreisförmigen Querschnitt und greift in den Einstich 31 ein, der teilkreisförmig ausgebildet ist. Das Widerlager 30 ist dabei an einer Seite unterbrochen, um eine radiale Deformation zu ermöglichen. Diese Unterbrechung 34 ist in der axialen Schnittdarstellung gemäß Figur 4 zu sehen. An beiden Enden 35 weist das Widerlager 30 jeweils eine Durchbrechung 36 auf, die ein einfaches Erfassen des Widerlagers 30 mit einem entsprechenden Werkzeug, vorzugsweise in Form einer Zange, ermöglicht.

Die Figur 5 zeigt eine alternative Ausführungsform des Erfindungsgegenstandes, wobei gleiche Bezugszeichen wieder gleiche Teile benennen. Bei dieser Ausführungsform ist das Widerlager 30 wiederum in Form eines Drahtringes ausgebildet, wobei dieser nun einen im Wesentlichen rechteckförmigen Querschnitt mit abgerundeten Ecken aufweist. Dabei ist die Form des Widerlagers 30 so gewählt, dass seine Erstreckung in radialer Richtung 37 kleiner ist als in axialer Richtung 38. Auf diese Weise ergibt sich eine zusätzliche Erhöhung der Scherfestigkeit des Widerlagers 30, ohne die Biegesteifigkeit des Widerlagers 30 in allzu große Höhen zu treiben.

**Bezugszeichenliste**

| | | | |
|---|---|---|---|
| 1 | Stabilisator | 33 | radiale Dicke |
| 2 | erstes Lager | 34 | Unterbrechung |
| 3 | zweites Lager | 35 | Ende |
| 4 | Kugel | 36 | Durchbrechung |
| 5 | Rohr | 37 | radiale Richtung |
| 6 | Kolben | 38 | axiale Richtung |
| 7 | Feder | | |
| 8 | Teleskop | | |
| 9 | erster Teil | | |
| 10 | zweiter Teil | | |
| 11 | Sackbohrung | | |
| 12 | Innengewinde | | |
| 13 | Außengewinde | | |
| 14 | Längsachse | | |
| 15 | Arretierbügel | | |
| 16 | Achse | | |
| 17 | Scheibe | | |
| 18 | Anschlagfläche | | |
| 19 | Verriegelungsbügel | | |
| 20 | Achse | | |
| 21 | Arretierung | | |
| 22 | Druckknopf | | |
| 23 | Achse | | |
| 24 | Abflachung | | |
| 25 | Einkerbung | | |
| 26 | Schlüsselfläche | | |
| 30 | Widerlager | | |
| 31 | Einstich | | |
| 32 | Durchmesser | | |

## Patentansprüche

1. Stabilisator für einen Unterlenker einer Drei-Punkt-Aufhängung eines Ackerschleppers, wobei der Stabilisator (1) mindestens ein Rohr (5) aufweist, in dem mindestens ein Kolben (6) längsverschiebbar gehalten ist, der mit dem mindestens einen Rohr (5) über mindestens eine Feder (7) elastisch gekoppelt ist, wobei die Verschiebbarkeit des mindestens einen Kolbens (6) durch mindestens einen Arretierbügel (15) aufhebbar ist, wobei im Bereich eines Endes des mindestens einen Kolbens (6) und/oder Rohres (5) mindestens ein Einstich (31) vorgesehen ist, der mindestens ein Widerlager (30) axial stützt, um die maximale Länge des Stabilisators (1) zu bestimmen, **dadurch gekennzeichnet, dass** im mindestens einen Einstich (31) das mindestens eine Widerlager (30) in Form eines elastisch verformbaren Drahtringes gehalten ist, dessen Durchmesser (32) höchstens dem 17-fachen seiner Dicke (33) in radialer Richtung (37) beträgt.

2. Stabilisator nach Anspruch 1, **dadurch gekennzeichnet, dass** der Ringdurchmesser (32) höchstens dem 15-fachen seiner Dicke (33) in radialer Richtung (37) beträgt.

3. Stabilisator nach Anspruch 2, **dadurch gekennzeichnet, dass** der Ringdurchmesser (32) höchstens dem 13-fachen seiner Dicke (33) in radialer Richtung (37) beträgt.

4. Stabilisator nach mindestens der Ansprüche 1 bis 3, **dadurch gekennzeichnet, dass** das Widerlager (30) eine größere Dicke in axialer Richtung (38) als in radialer Richtung (37) aufweist.

5. Stabilisator nach mindestens einem der Ansprüche 1 bis 4, **dadurch gekennzeichnet, dass** das mindestens eine Widerlager (30) im Querschnitt rechteckförmig ausgebildet ist.

6. Stabilisator nach Anspruch 5, **dadurch gekennzeichnet, dass** der Querschnitt abgerundete Ecken aufweist.

## Claims

1. Stabilizer for a lower link of a three-point suspension system of an agricultural tractor, wherein the stabilizer (1) has at least one tube (5) in which at least one piston (6) is held in a longitudinally displaceable manner, said piston being elastically coupled to the at least one tube (5) by way of at least one spring (7), wherein the displaceability of the at least one piston (6) can be cancelled by way of at least one arresting yoke (15), wherein, in the region of an end of the at least one piston (6) and/or tube (5), there is provided at least one recess (31) which axially supports at least one abutment (30) in order to determine the maximum length of the stabilizer (1), **characterized in that**, in the at least one recess (31), the at least one abutment (30) is held in the form of an elastically deformable wire ring, the diameter (32) of which is at most 17 times the thickness (33) thereof in a radial direction (37).

2. Stabilizer according to Claim 1, **characterized in that** the ring diameter (32) is at most 15 times the thickness (33) thereof in a radial direction (37).

3. Stabilizer according to Claim 2, **characterized in that** the ring diameter (32) is at most 13 times the thickness (33) thereof in a radial direction (37).

4. Stabilizer according to at least one of Claims 1 to 3, **characterized in that** the abutment (30) has a greater thickness in an axial direction (38) than in a radial direction (37).

5. Stabilizer according to at least one of Claims 1 to 4, **characterized in that** the at least one abutment (30) is rectangular in cross section.

6. Stabilizer according to Claim 5, **characterized in that** the cross section has rounded corners.

## Revendications

1. Stabilisateur destiné à une biellette inférieure d'un attelage trois points d'un tracteur agricole, le stabilisateur (1) comportant au moins un tube (5) dans lequel au moins un piston (6) est maintenu de manière à pouvoir coulisser longitudinalement et est accouplé élastiquement à l'au moins un tube (5) par le biais d'au moins un ressort (7), la capacité de coulissement de l'au moins un piston (6) pouvant être supprimée par le biais d'au moins un étrier de blocage (15), au moins une encoche (31) étant ménagée dans la région d'une extrémité de l'au moins un piston (6) et/ou tube (5) et supportant axialement au moins une butée (30) pour déterminer la longueur maximale du stabilisateur (1), **caractérisé en ce que** l'au moins une butée (30) est maintenue dans l'au moins une encoche (31) sous la forme d'une bague filaire déformable élastiquement dont le diamètre (32) est égal au plus à 17 fois l' épaisseur (33) de celle-ci dans la direction radiale (37).

2. Stabilisateur selon la revendication 1, **caractérisé en ce que** le diamètre (32) de la bague est égal au plus à 15 fois l'épaisseur (33) de celle-ci dans une direction radiale (37).

3. Stabilisateur selon la revendication 2, **caractérisé en ce que** le diamètre (32) de la bague est égal au plus à 13 fois l'épaisseur (33) de celle-ci dans une direction radiale (37).

4. Stabilisateur selon au moins les revendications 1 à 3, **caractérisé en ce que** la butée (30) a une épaisseur plus importante dans la direction axiale (38) que dans la direction radiale (37).

5. Stabilisateur selon au moins l'une des revendications 1 à 4, **caractérisé en ce que** l'au moins une butée (30) a une section transversale rectangulaire.

6. Stabilisateur selon la revendication 5, **caractérisé en ce que** la section transversale présente des coins arrondis.
